# EUROPEAN PATENT SPECIFICATION

(11) **EP 3 723 493 B1**
(45) Date of publication and mention of the grant of the patent: **30.06.2021**
(21) Application number: 18810975.5
(22) Date of filing: 26.11.2018
(51) Int. Cl.: A23F 3/06, A23F 3/10, A23F 3/12

(54) **A PROCESS FOR PRODUCING A TEA PRODUCT**
VERFAHREN ZUR HERSTELLUNG EINES TEEPRODUKTS
PROCÉDÉ DE PRODUCTION D'UN PRODUIT À BASE DE THÉ

(30) Priority: 14.12.2017 EP 17207352
(43) Date of publication of application: 21.10.2020
(73) Proprietor: Unilever IP Holdings B.V., 3013 AL Rotterdam (NL); Unilever PLC, London Greater London EC4Y 0DY (GB)
(72) Inventor: BASAVARAJU, Lokesh, Bangalore 560 066 (IN); GOVINDASWAMY, Vadivel, Bangalore 560 066 (IN); GUTTAPADU, Sreeramulu, Bangalore 560 066 (IN); PALAGIRI, Swathy, Bangalore 560 066 (IN)
(74) Representative: Warner, Guy Jonathan
(86) International application number: PCT/EP2018/082484
(87) International publication number: WO 2019/115211

(56) References cited:
- WO-A1-00/47057
- WO-A1-2017/063906
- US-A- 4 051 264
- JIE TENG ET AL: "Quality components and antidepressant-like effects of GABA green tea", FOOD & FUNCTION, vol. 8, no. 9, 1 January 2017 (2017-01-01) , pages 3311-3318, XP055478928, GB ISSN: 2042-6496, DOI: 10.1039/C7FO01045A
- Y. SAWAI ET AL: "Cycling treatment of anaerobic and aerobic incubation increases the content of [gamma] -aminobutyric acid in tea shoots", AMINO ACIDS., vol. 20, no. 3, 12 April 2001 (2001-04-12) , pages 331-334, XP055479052, AU ISSN: 0939-4451, DOI: 10.1007/s007260170049

## Description

### Field of the invention

The present invention relates to a process for producing a tea product. More particularly the present invention relates to a process for producing a cold-water infusible leaf tea product.

### Background of the invention

Tea is one of the most popular beverages in the world. There are varieties of tea available in the market e.g. black tea, green tea, oolong tea, white tea, *etc.* Out of these, black tea is the most prevalent. One common way of consuming black tea is in the form of a hot tea beverage, with or without the addition of milk. Another way of consuming black tea is in a cold format, for example iced tea is a popular beverage - particularly in the US.

Black tea is predominantly characterized by its rich red and bright coloured infusion. A problem associated with black tea beverages prepared using cold water is that the tea infusion lacks colour. This is because the soluble tea solids that are responsible for the rich red colour are mostly soluble only at higher temperatures. Therefore, a reduction in the brewing temperature results in lower solubility of the solids that are responsible for colour generation.

There is prior art which describes the preparation of cold water infusible tea products.

US 4,051,264 (Thomas J. Lipton, Inc., 1977) discloses cold water extractable tea leaf prepared by treatment of fresh green tea with the enzyme tannase under anaerobic conditions.

WO 00/47057 (Unilever, 2000) discloses a method for preparing a cold water infusing leaf tea wherein fresh tea leaves are macerated and pre-treated with tannase before being fermented in the presence of hydrogen peroxide. The dried leaf product infuses in cold water to give good flavour and colour

A problem associated with the prior art is that either foreign substances (e.g. hydrogen peroxide) have been added during the process for producing a natural product like tea and/or the infusion colour of the resultant tea product is not very attractive to consumers.

Consumers also look for health benefits in a product like tea. For example, GABA (gamma-aminobutyric acid) is purported to have numerous health benefits. GABA is formed from glutamic acid under anaerobic conditions in tea shoots. For example, Sawai, Y. et al. Amono Acids (2001) 20: 331-334 describes cycling anaerobic and aerobic incubation of tea shoots to increase the content of GABA.

Therefore, there is a need to provide a cold water infusible tea product that provides an infusion with enhanced red colour and GABA content.

It is an object of the present invention to provide a cold water infusible tea product, particularly one that provides an infusion with enhanced red colour and/or enhanced GABA content.

The present inventors have surprisingly found out that a process that comprises an initial step of anaerobic incubation followed by treatment with tannase produce a tea product that provides an infusion with rich red colour and high GABA content thereby satisfying one or more of the above mentioned objects.

### Summary of the invention

Accordingly, in a first aspect there is provided a process for preparing a leaf tea product comprising the steps of:
(a) incubating fresh tea leaf under anaerobic conditions at a temperature of 4°C to 60°C for a period of 4 to 36 hours;
(b) subjecting the incubated leaf to a step of comminution to produce dhool; and
(c) fermenting the dhool in the presence of 0.001 to 5% tannase by weight of the dhool;
wherein there is no step of comminution of the fresh tea leaf before step (a).

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per se.* Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Fresh tea leaf" refers to tea leaf, buds and/or stem that have never been dried to a water content of less than 30% by weight, and usually have water content in the range 60 to 90%.

"Fermentation" refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

"Black tea" refers to substantially fermented tea. Black tea has different characteristics to green tea. Black tea is more astringent in taste and less bitter than green tea. The redness of black tea liquor is also significantly higher than that of green tea. Black tea also contains a higher level of theaflavins.

The present invention provides a process for preparing a leaf tea product comprising the steps of:
(a) incubating fresh tea leaf under anaerobic conditions at a temperature of 4°C to 60°C for a period of 4 to 36 hours;
(b) subjecting the incubated leaf to a step of comminutionto produce dhool; and
(c) fermenting the dhool in presence of 0.001 to 5% tannase by weight of the dhool;
wherein there is no step of comminution of the fresh tea leaf before step (a).

### Step (a):

Step (a) includes incubating fresh tea leaf at a temperature of 4°C to 60°C under anaerobic conditions for a period of 4 to 36 hours. The term "anaerobic conditions" as used herein means that the gas phase in contact with the leaf has less than 3%, preferably less than 2% and more preferably less than 1% oxygen by volume. It is particularly preferred that the gas phase in contact with the leaf is substantially free of oxygen.

The fresh leaf may be selected as two leaves and a bud, three leaves and a bud, or more than three leaves and a bud. The duration of time between plucking the fresh tea leaf and the anaerobic incubation is preferably less than 24 hours, more preferably less than 12 hours and most preferably less than 8 hours. However, it is possible that the duration of time between plucking the fresh tea leaf and the anaerobic incubation can be longer than 24 hours if the tea leaf is stored at temperature of less than 15°C.

### Anaerobic conditions:

The anaerobic conditions can be achieved in any suitable manner. For example, such conditions may be achieved by:
(i) placing the fresh tea leaf in a container, and closing the container; or
(ii) placing the fresh tea leaf in a container, purging a gas essentially free of oxygen through the container, and closing the container, or placing the leaf in an airtight chamber or under vacuum.

Preferably, the anaerobic conditions are achieved by: placing the fresh tea leaf in a container, and closing the container, or placing the tea leaf in a container, purging a gas essentially free of oxygen through the container, and closing the container.

By placing the fresh leaf in a container and closing the container, the oxygen concentration in the gas phase decreases with time and anaerobic conditions are achieved after keeping the container closed for a certain amount of time. The container is closed for a duration of preferably greater than 3 hours, more preferably greater than 4 hours and most preferably greater than 6 hours or even greater than 8 hours.

Alternatively and more preferably, the anaerobic conditions are achieved by placing the leaf in a container, purging a gas essentially free of oxygen through the container and closing the container. The gas other than oxygen is preferably nitrogen or carbon dioxide, most preferably nitrogen.

Once the container is closed in step (i) or (ii) above, there is no particular restriction as to the pressure in the container. The pressure inside the closed container is preferably from 1 to 1000 mm Hg absolute, more preferably 10 to 800 mm Hg absolute and most preferably 20 mm Hg.

It is preferred that the moisture loss from the leaf during the step is as low as possible. This is advantageously and conveniently achieved by carrying out this step under closed conditions. The incubated tea leaf after this step preferably comprises water in the range of from 70 to 75% by weight.

### Incubation temperature:

The incubation of step (a) is at a temperature in the range of 4°C to 60°C, preferably in the range of 4°C to 55°C, more preferably in the range of 10°C to 50°C.

### Duration of anaerobic incubation:

The time of incubation is in the range of 4 to 36 hours, preferably 4 to 30 hours, more preferably 6 to 30 hours and most preferably 8 to 20 hours.

### Step (b):

In this step, the incubated leaf is subjected to comminution to produce dhool. Comminution breaks down the plant tissue structure so that the fermentable substrates and fermenting enzymes from within the plant cells and tissue are released. This step of comminution is preferably carried out by crushing, tearing and curling (known in the art of tea processing as CTC). One or more CTC steps may be carried out..

Alternatively, after the incubation step, the incubated tea leaf is comminuted by being rolled in an orthodox roller or being passed through a rotorvane. Both these comminution methods result in the fermentable substrates and fermenting enzymes from within the plant cells and tissue being released .

A combination of two or more of these comminution methods may be used in the present invention.

In the process of the present invention, there is no step of comminution of the tea leaf before step (a).

### Step (c):

The dhool (i.e. comminuted leaf) then undergoes fermentation. The characteristic feature of the present invention is that fermentation is carried out in presence of tannase. The most preferably time for the addition of tannase is at the start of fermentation (i.e. immediately after the comminution step). It is also possible to add the tannase during the comminution step. For example, if multiple passes through a CTC machine and/or a rotorvane are used to produce the dhool, then the tannase may be added during the final pass.

Tannase is a well-known enzyme belonging to the family of hydrolases. The amount of tannase added at the time of fermentation is in the range of 0.001 to 5%, preferably 0.01 to 5%, more preferably 0.01 to 2% and most preferably 0.1 to 1 % by weight of the dhool.

Fermentation is carried out under aerobic conditions. Preferably, fermentation is carried out by keeping the leaf at a temperature of 10°C to 60°C for 15 minutes to 5 hours. Preferably, the temperature of the fermentation is from 25°C to 45°C and more preferably from 25°C to 40°C. The duration of the fermentation step is preferably is from 30 minutes to 4 hours, more preferably from 1 to 4 hours and most preferably from 1 to 3 hours. During fermentation, the fermentable substances in the tea leaf undergo enzymatic reactions which produce a complex mixture of polyphenolic substances that are associated with typical black tea characteristics.

### Optional steps:

The process preferably comprises a subsequent step of drying the fermented tea leaf. During the drying step, the fermented tea leaf is preferably dried to moisture content of less than 10% by total mass of the tea leaf, more preferably less than 5 % by total mass of the tea leaf, to obtain the leaf tea product.

The drying step is preferably performed at a temperature in the range of 80°C to 130°C, more preferably 90°C to 130°C, most preferably 100°C to 130°C.

The drying step is preferably carried out by thermal drying, freeze drying or vacuum drying.

Thermal drying is preferably carried out by contacting the leaf with air. Thermal drying may be carried out in any conventional dryer. However, a fluidized bed dryer or a tray dryer is particularly preferred for thermal drying.

The leaf can also be dried by vacuum drying. During vacuum drying the tea leaf is subjected to an absolute pressure of preferably from 5 to 500 mm Hg, more preferably from 50 to 300 mm Hg and most preferably from 100 to 200 mm Hg. Vacuum drying is preferably carried out at a temperature in the range of 20°C to 70°C, more preferably 25°C to 60°C and most preferably 30°C to 55°C. Vacuum drying may be carried out in any suitable vacuum drier, preferably in a rotary vacuum drier.

The leaf tea produced by the process of the present invention can be infused in hot water or cold water. It is particularly suitable for cold water extraction, for example using water at a temperature of less than 40°C, preferably less than 30°C. The tea extract obtained following a hot water extraction or a cold water extraction can be used as the base for a ready-to-drink tea beverage (such as a ready-to drink tea beverage packaged in a can or a bottle and optionally flavoured and/or carbonated). Such a ready-to-drink tea product is noticeable brighter/redder in colour than known products and/or may have a more desirable taste profile, particularly when compared to known cold-water extracted products. In the interests of microbiological stability and/or taste profile, the ready-to-drink tea product is preferably acidic (e.g. having a pH of 2 to 6, preferably 2.5 to 5.5, more preferably 3 to 4). The tea extract may be concentrated to provide a concentrated tea extract or dried to provide an instant tea product.

Now the invention will be demonstrated in terms of examples. The following examples are just for illustration and in no way limit the scope of the present invention.

### Examples

### Preparation of different tea products:

### Comparative example A:

Fresh tea leaves (moisture content 77%) were procured from a tea garden in southern India. These leaves were then withered for 18 hours. After that, the tea leaves were subjected to CTC (cut tear curl) for 4 times to obtain macerated dhool. The macerated dhool was fermented (by exposing to air at 25°C) for 90 minutes followed by drying the fermented dhool to a moisture content of less than 5% (130°C in a tray drier for 20 minutes).

### Comparative example B:

Fresh tea leaves (moisture content 77%) were procured from the tea garden in southern India. These leaves were then withered for 18 hours. After that, the tea leaves were subjected to CTC (cut tear curl) for 4 times to obtain macerated dhool. After the maceration 0.01% of tannase (from Kikkoman Japan, Lot No: 20140916A, activity 50000 units/g) was mixed with the dhool. Then the dhool was fermented (by exposing to air at 25°C) for 90 minutes followed by drying the fermented dhool to a moisture content of less than 5% (130°C in a tray drier for 20 minutes).

### Comparative example C:

Fresh tea leaves (moisture content 77%) were procured from the tea garden in southern India. These tea leaves were then put in an air-tight aseptic plastic bag, sealed and incubated for 18 hours. After that, the tea leaves were subjected to CTC (cut tear curl) for 4 times to obtain macerated dhool. The macerated dhool was fermented (by exposing to air at 25°C) for 90 minutes followed by drying the fermented dhool to a moisture content of less than 5% (130°C in a tray drier for 20 minutes).

### Comparative example D:

Fresh tea leaves (moisture content 77%) were procured from the tea garden in southern India. These leaves were then withered for 18 hours. After that, the tea leaves were subjected to CTC (cut tear curl) for 4 times to obtain macerated dhool. After the maceration 0.01% of tannase (from Kikkoman Japan, Lot No: 20140916A, activity 50000 units/g) was mixed with the dhool. Then the dhool was incubated for 90 minutes by putting the dhool in an air-tight aseptic plastic bag under anaerobic condition (by purging nitrogen gas in the bag before sealing). After the incubation, the incubated dhool was taken out from the bag and then dried to a moisture content of less than 5% (130°C in a tray drier for 20 minutes).

### Example 1:

Fresh tea leaves (moisture content 77%) were procured from the tea garden in southern India. These tea leaves were then put in an air-tight aseptic plastic bag, sealed and incubated for 18 hours. After that, the tea leaves were subjected to CTC (cut tear curl) for 4 times to obtain macerated dhool. After the maceration 0.01% of tannase (from Kikkoman Japan, Lot No: 20140916A, activity 50000 units/g) was mixed with the dhool. Then the dhool was fermented (by exposing to air at 25°C) for 90 minutes followed by drying the fermented dhool to a moisture content of less than 5% (130°C in a tray drier for 20 minutes).

### Measurement Methods:

### Colour measurement:

Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10° Observer angle. Measurements were made using a quartz cuvette of 10 mm path length. The cuvette was filled up to the brim with tea infusion and placed in the instrument for colour measurement. The instrument was calibrated using a standard white tile (Hunterlab Duffuse/8°, mode-RSEX, Port-1" and area- large) in accordance with the instructions provided in the instruction manual. The L*a*b* values were measured at room temperature (25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

### Infusion conditions:

Leaf tea infusions were made by using two different protocols as described below:

### Protocol 1 (loose tea protocol):

2 g each of the above prepared leaf tea products was brewed in 200 mL of deionized water at 25°C for 2 minutes.

### Protocol 2 (tea bag protocol):

Tea bag protocol: 2 g each of the above prepared leaf tea products was sealed within a pyramid tea bag and dunked in 200 mL of deionized water at 25°C for 30 seconds (1 dunk per second).

### GABA measurement:

GABA was measured as per the procedure described in J. Agric. Food Chem., 2011, 59: 3641 - 3648.

The results of these experiments are summarized below in table 1:

**Table 1**

| Example No. | Protocol 1 | | | Protocol 2 | | |
|---|---|---|---|---|---|---|
| | a* value | b* value | GABA (ppm) | a* value | b* value | GABA (ppm) |
| A | - 0.82 | 27.33 | 0.08 | - 0.98 | 25.64 | 0.08 |
| B | 0.65 | 52.85 | 0.09 | - 1.05 | 44.77 | 0.08 |
| C | 0.84 | 37.57 | 11.00 | 0.01 | 33 | 8.90 |
| D | 1.20 | 54.77 | 0.09 | - 0.69 | 47.06 | 0.08 |
| 1 | 2.21 | 57.09 | 11.19 | 0.28 | 49.98 | 8.95 |

From the above Table, it is clear that the tea product obtained by the process of the present invention (Example 1) provides much higher redness (a*) and brightness (b*) values when compared with the examples that are not within the scope of the present invention (i.e. Examples A to D). It is particularly noted that anaerobic incubation done after tannase treatment (Example D) is considerably less effective in terms of the a* and b* values of the resulting infusions. It is also noted that the GABA content is specifically higher if the anaerobic incubation is done on the fresh leaf.

Therefore, it is evident form the description and the examples that the present invention able to provide a cold water infusible tea product that produces an infusion with enhanced a* and b* values and with a high GABA content.

## Claims

1. A process for preparing a leaf tea product comprising the steps of:
(a) incubating fresh tea leaf under anaerobic conditions at a temperature of 4°C to 60°C for a period of 4 to 36 hours;
(b) subjecting the incubated leaf to a step of comminution to produce dhool; and
(c) fermenting the dhool in the presence of 0.001 to 5% tannase by weight of the dhool;
wherein there is no step of comminution of the fresh tea leaf before step (a).

2. A process as claimed in claim 1 further comprises a subsequent step of drying the fermented dhool to produce leaf tea.

3. A process as claimed in claim 2 wherein the drying is performed at a temperature in the range of 80°C to 130°C.

4. A process as claimed in claim 1 wherein the temperature in step (a) is 10°C to 50°C.

5. A process as claimed in claim 1 wherein the amount of tannase in step (c) is from 0.01 to 2% by weight of the dhool.

6. A process as claimed in claim 1 wherein the moisture content of the fresh tea leaf is in the range of 60 to 90% by weight.

7. A process as claimed in claim 1 wherein fermentation is performed by keeping the dhool at a temperature of 10°C to 60°C for 15 minutes to 5 hours.

8. A process as claimed in claim 1 wherein the anaerobic conditions are achieved by:
(i) placing the fresh tea leaf in a container, and closing the container, or
(ii) placing the tea leaf in a container, purging a gas essentially free of oxygen through the container, and closing the container, or placing the leaf in an airtight chamber or under vacuum.

9. A process as claimed in claim 8 wherein the anaerobic conditions are achieved by placing the fresh tea leaf in a container, and closing the container.

## Patentansprüche

1. Verfahren zur Herstellung eines Blattteeprodukts, umfassend die Schritte:
(a) Inkubieren von frischem Teeblatt unter anaeroben Bedingungen bei einer Temperatur von 4 °C bis 60 °C für einen Zeitraum von 4 bis 36 Stunden;
(b) Unterwerfen des inkubierten Blattes einem Schritt der Zerkleinerung, um Dhool herzustellen; und
(c) Fermentieren des Dhools in Anwesenheit von 0,001 bis 5% Tannase, bezogen auf das Gewicht des Dhools,
wobei es vor Schritt (a) keinen Schritt der Zerkleinerung des frischen Teeblatts gibt.

2. Verfahren wie in Anspruch 1 beansprucht, das ferner einen anschließenden Schritt des Trocknens des fermentierten Dhools zur Herstellung von Blatttee umfasst.

3. Verfahren wie in Anspruch 2 beansprucht, wobei das Trocknen bei einer Temperatur im Bereich von 80 °C bis 130 °C durchgeführt wird.

4. Verfahren wie in Anspruch 1 beansprucht, wobei die Temperatur in Schritt (a) 10 °C bis 50 °C beträgt.

5. Verfahren wie in Anspruch 1 beansprucht, wobei die Menge an Tannase in Schritt (c) 0,01 bis 2 Gewichts-% des Dhools beträgt.

6. Verfahren wie in Anspruch 1 beansprucht, wobei der Feuchtigkeitsgehalt des frischen Teeblattes im Bereich von 60 bis 90 Gewichts-% liegt.

7. Verfahren wie in Anspruch 1 beansprucht, wobei die Fermentation durchgeführt wird, indem das Dhool 15 Minuten bis 5 Stunden bei einer Temperatur von 10 °C bis 60 °C gehalten wird.

8. Verfahren wie in Anspruch 1 beansprucht, wobei die anaeroben Bedingungen erreicht werden durch:
(i) Platzieren des frischen Teeblatts in einem Behälter und Schließen des Behälters oder
(ii) Platzieren des Teeblatts in einem Behälter, Spülen mit einem Gas, das im Wesentlichen frei von Sauerstoff ist, durch den Behälter und Schließen des Behälters oder Platzieren des Blattes in einer luftdichten Kammer oder unter Vakuum.

9. Verfahren wie in Anspruch 8 beansprucht, wobei die anaeroben Bedingungen erreicht werden, indem das frische Teeblatt in einen Behälter gegeben und der Behälter geschlossen wird.

## Revendications

1. Procédé pour la préparation d'un produit de thé en feuille comprenant les étapes de :
(a) incubation de feuille de thé fraiche dans des conditions anaérobies à une température de 4°C à 60°C sur une période de 4 à 36 heures ;
(b) soumission de la feuille incubée à une étape de broyage pour produire du dhool ; et
(c) fermentation du dhool en présence de 0,001 à 5 % de tannase en masse du dhool ;
dans lequel il n'y a pas d'étape de broyage de la feuille de thé fraiche avant l'étape (a).

2. Procédé selon la revendication 1 qui comprend de plus une étape subséquente de séchage du dhool fermenté pour produire du thé en feuille.

3. Procédé selon la revendication 2, dans lequel le séchage est réalisé à une température dans l'intervalle de 80°C à 130°C.

4. Procédé selon la revendication 1, dans lequel la température dans l'étape (a) est de 10°C à 50°C.

5. Procédé selon la revendication 1, dans lequel la quantité de tannase dans l'étape (c) est de 0,01 à 2 % en masse du dhool.

6. Procédé selon la revendication 1, dans lequel la teneur en humidité de la feuille de thé fraiche se trouve dans l'intervalle de 60 à 90 % en masse.

7. Procédé selon la revendication 1, dans lequel la fermentation est réalisée en maintenant le dhool à une température de 10°C à 60°C pendant de 15 minutes à 5 heures.

8. Procédé selon la revendication 1, dans lequel les conditions anaérobies sont réalisées par :
(i) disposition de la feuille de thé fraiche dans un récipient, et fermeture du récipient, ou
(ii) disposition de la feuille de thé dans un récipient, purge d'un gaz essentiellement exempt d'oxygène à travers le récipient, et fermeture du récipient, ou disposition de la feuille dans une chambre étanche à l'air ou sous vide.

9. Procédé selon la revendication 8, dans lequel les conditions anaérobies sont réalisées par disposition de la feuille de thé fraiche dans un récipient, et fermeture du récipient.
